# DEMANDE DE BREVET EUROPEEN

(11) **EP 0 688 851 A1**
(43) Date de publication de la demande: **27.12.1995**
(21) Numéro de dépôt: 95401423.9
(22) Date de dépôt: 16.06.1995
(51) Int. Cl.: C09K 19/54, G02F 1/1333

(54) **Procédé d'obtention de matériaux composites à base de polymère réticulé et de molécules fluides, comprenant une étape de séchage en phase supercritique**

(30) Priorité: 21.06.1994 FR 9407572
(71) Demandeur: THOMSON-CSF, 75008 Paris (FR)
(72) Inventeur: Bouteiller, Laurent, F-92402 Courbevoie Cedex (FR)
(74) Mandataire: Guérin, Michel

(57) **Abrégé**

L'invention concerne un procédé d'obtention de matériau composite comprenant un réseau de polymère réticulé et des molécules fluides. De tels matériaux utilisant comme molécules du cristal liquide, sont notamment utilisés dans les écrans de visualisation.

L'originalité de l'invention réside dans le séchage en phase supercritique du solvant des molécules ayant permis l'élaboration du réseau. Généralement, l'opération de séchage par évaporation du solvant entraîne une dégradation de la structure réseau. Avec le procédé selon l'invention, le réseau conserve sa structure initiale, permettant d'obtenir de bonnes performances en diffusion de la lumière.

Application : Ecran de visualisation, protection pour détecteur.

## Description

Le domaine de l'invention est notamment celui des écrans de visualisation et plus généralement celui des dispositifs utilisant des matériaux composites capables de passer d'un état transparent ou diffusant à respectivement un état diffusant ou transparent sous l'action d'une commande électrique ou optique.

Dans le cadre des écrans de visualisation réalisés à partir de composants polymères-cristaux liquides pouvant contenir des colorants dichroïques, l'effet mis en jeu est un effet électrooptique généralement un film de composite polymère-cristal liquide coloré est compris entre deux électrodes conductrices transparentes. Le cristal liquide coloré est obtenu par dilution de molécules colorantes entre des molécules de cristal liquide. Au repos, sans tension, le film est diffusant en raison des différences d'indice entre polymère et cristal liquide, et de plus absorbant en raison des molécules de colorant dont l'orientation imposée par celle du cristal liquide varie de manière aléatoire d'un domaine à l'autre. En appliquant une tension aux bornes de ce film, les molécules de cristal liquide s'orientent avec les molécules de colorant choisi dichroïque, parallèlement au champ électrique appliqué. En travaillant d'une part avec un cristal liquide dont l'indice ordinaire est égal à celui du polymère (il n'y a pas diffusion à l'interface polymère-cristal liquide) et d'autre part avec un colorant dichroïque qui n'absorbe plus, on obtient sous un champ électrique, un film transparent. Un tel film est donc susceptible d'offrir deux états, un état diffusant et absorbant et un état transparent non absorbant. Le contraste obtenu avec de tels composites est beaucoup plus satisfaisant que celui proposé avec des composites ne renfermant pas de colorants dichroïques et qui ne présentent qu'un état diffusant et un état transparent.

De plus, l'utilisation de composite cristal liquide coloré polymère offre de nombreux avantages par rapport aux autres techniques de visualisation utilisant notamment des cellules à cristal liquide. En effet, ces composites :
- bénéficient de la facilité de mise en oeuvre des polymères, ce qui permet de les déposer facilement en couche mince, d'épaisseur contrôlée sur des grandes surfaces ;
- ne nécessitent pas de traitement de surface des substrats formant l'écran ;
- fonctionnent sans polariseur (d'où un gain important de luminosité);
- présentent un effet électrooptique qui possède un angle de vue de l'ordre de 150°.

Néanmoins, à l'heure actuelle, les techniques de mise en oeuvre de ces composés ne sont pas satisfaisantes et ce notamment en raison d'impuretés restantes.

En effet, la principale voie d'obtention de composites cristaux liquides-polymères est la méthode par séparation de phase induite par polymérisation. Cette méthode consiste à réaliser un mélange homogène d'un cristal liquide et d'un monomère, puis de polymériser (thermiquement ou photochimiquement). Le polymère qui se forme devient insoluble dans le cristal liquide et démixe.

Par conséquent, la phase fluide du composite contient principalement le cristal liquide, mais aussi du monomère, des fragments d'amorceur, et des radicaux libres piégés. D'une part, ces impuretés diminuent la résistivité du matériau et donc diminuent la constante de temps du condensateur formé par le composite introduit entre deux électrodes. D'autre part, les radicaux libres résiduels induisent un vieillissement important de la cellule. Il est donc important de pouvoir "purifier" le composite ainsi obtenu, en retirant la phase fluide, puis en introduisant un mélange propre de cristal liquide pouvant contenir du colorant dichroïque.

Par ailleurs, l'introduction de colorants ne peut se faire directement car ils sont dégradés par les radicaux libres.

Pour ces deux raisons, il peut être intéressant de remplacer le cristal liquide qui a servi à la réalisation du composite par du cristal liquide propre (pouvant contenir un colorant): une première technique (Takenchi K. Umezu Y. Takatsu H. 17 th Japan LC Conf. 308, Sept. 91) consiste à ouvrir la cellule et à laver le cristal liquide avec un solvant.

Il est également possible de faire diffuser le solvant sans ouvrir la cellule, puis d'évaporer ce solvant.

L'invention repose sur le fait que les différentes approches pour vider le réseau polymère affectent ce dernier, dont la porosité est dégradée lors de l'élimination du solvant. En effet, lorsque le liquide s'évapore à l'intérieur des pores du polymère, il y a création d'une interface liquide/gaz où s'exercent des forces dues à la tension de surface du liquide. La somme de ces forces a pour effet de détruire le réseau. Cette détérioration affecte alors les propriétés du composite cristal liquide-polymère obtenu après une nouvelle introduction de cristal liquide dans le réseau polymère préalablement "nettoyé".

On peut également se trouver confronté au même type de problème dans les dispositifs "limiteur optique" utilisés pour atténuer des faisceaux lumineux de forte puissance capables d'endommager des systèmes optiques. En effet pour assurer la protection de systèmes optiques types détecteurs il peut être avantageux d'intégrer aux systèmes des matériaux composites comportant un réseau poreux de polymère dans lequel sont incluses des molécules dont l'indice de réfraction peut varier fortement sous l'action d'un faisceau lumineux intense. En choisissant judicieusement des molécules ayant initialement un indice de réfraction égal à celui du polymère, et un indice de réfraction donc nettement différent sous forte irradiation, il est ainsi possible de passer d'un état transparent à un état diffusant par commande optique.

Les molécules introduites peuvent typiquement être de type CS₂, ces molécules devant être insérées dans le réseau polymère pouvant à cet égard être constitué à l'aide d'un cristal liquide initial (_{χ}L)ₒ comme dans la préparation de matériau composite pour écran de visualisation.

Afin de résoudre ce problème général, l'invention propose un procédé d'obtention de matériaux composites à base du polymère et de molécules fluides dans lequel le retrait de la phase fluide se fait sans perturber le polymère. Plus précisément, l'invention a pour objet un procédé d'obtention de matériau composite comprenant un polymère réticulé P, des molécules fluides m, caractérisé en ce qu'il comprend les étapes suivantes :
* la réalisation d'un film poreux F de polymère réticulé comprenant du cristal liquide (_{χ}L)ₒ au sein des pores ;
* l'immersion dudit film dans un solvant S du cristal liquide (_{χ}L)ₒ pour dissoudre ledit cristal liquide ;
* le séchage dudit film dans des conditions de température et de pression proches ou dans la phase supercritique ;
* le remplissage du film séché par des molécules m.

Le procédé selon l'invention peut avantageusement comprendre plusieurs étapes de dissolution avec différents solvants, lorsqu'il n'est pas facile de cumuler les fonctions de bon solvant du cristal liquide d'une part et d'autre part température et pression critiques facilement accessibles.

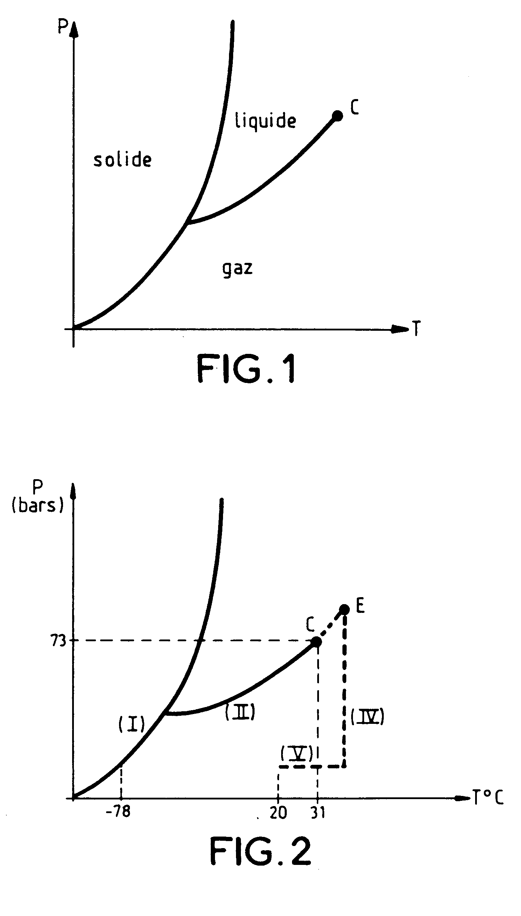

Dans le procédé d'obtention selon l'invention, I'opération de séchage proche ou dans la phase supercritique, c'est-à-dire au-delà du point C de coordonnées Tc, Pc dans le diagramme d'état représenté à la figure 1, permet de passer continûment du liquide au gaz et de se situer dans une phase unique fluide, permettant de s'affranchir des problèmes générés par l'interface liquide/gaz du solvant incorporé dans le réseau polymère. En effet, la tension de surface du solvant dans les pores a tendance à écraser le réseau polymère. Il est d'autre part possible de choisir les conditions de pression et de température maximales atteintes lors du cycle de séchage, pour optimiser le pouvoir solubilisant du fluide supercritique (solvant).

Dans le cadre d'un écran de visualisation, les molécules m peuvent être des molécules de cristal liquide (_{χ}L). Dans le cadre de "limiteur optique" ces molécules m peuvent être de type molécules présentant un indice de réfraction fortement non linéaire.

L'invention sera mieux comprise et d'autres avantages apparaîtront à la lecture de la description qui va suivre et des figures annexées parmi lesquelles :
- la figure 1 représente un diagramme d'état correspondant aux trois états (solide, liquide, gaz) en fonction de la pression et de la température ;
- la figure 2 représente le diagramme d'état du dioxyde de carbone, utilisé dans un exemple de procédé selon l'invention pour réaliser un réseau de polymère comprenant du cristal liquide ;
- la figure 3 illustre les performances d'un exemple de matériau composite obtenu selon un procédé de l'art connu, concernant l'évolution de la transmission d'une cellule contenant le matériau composite, en fonction de la tension appliquée sur ladite cellule ;
- la figure 4 illustre les performances d'un exemple de matériau composite obtenu selon le procédé de l'invention, concernant l'évolution de la transmission d'une cellule contenant le matériau composite en fonction de la tension appliquée sur ladite cellule ;
- la figure 5 illustre le même type de courbe que celles représentées en figures 3 et 4, pour un composite réseau de polymère/cristal liquide (_{χ}L)ₒ initial donc avant retrait du cristal liquide et séchage du solvant.

L'invention va être décrite plus précisément dans le cadre de la réalisation de composite polymère/cristal liquide. Elle peut cependant être généralisée dès lors qu'il convient de remplir un film poreux de polymère réticulé par des molécules fluides.

Pour mettre en oeuvre le procédé d'obtention de composite polymère/cristal liquide selon l'invention, il faut dans un premier temps réaliser un premier film de polymère contenant du cristal liquide (_{χ}L)ₒ, ledit cristal liquide permettant de créer une porosité capable de recevoir le cristal liquide (_{χ}L) final désiré, ou un mélange cristal liquide (_{χ}L)/colorant dichroïque.

Pour cela il est possible de partir d'un mélange de monomère, de photoamorceur, de cristal liquide pour obtenir un polymère de porosité variable, selon les concentrations des différentes entités initiales.

Un tel mélange peut avantageusement être introduit par capillarité dans une cellule préalablement formée par deux substrats conducteurs transparents (il peut s'agir de lame de matériau transparent recouvert d'une fine couche conductrice d'oxyde d'indium et d'étain) et des cales d'épaisseur connue et maîtrisée. La cellule ainsi élaborée et remplie peut être irradiée par un rayonnement ultraviolet. On obtient alors un réseau réticulé de polymère contenant des inclusions de cristal liquide (_{χ}L)ₒ La cellule peut alors être immergée dans un grand volume de solvant S du cristal liquide, permettant par là-même la dissolution sélective du cristal liquide au travers du réseau poreux de polymère.

Comme les solvants classiques des cristaux liquides présentent généralement une température critique supérieure à environ 190°C, température qui dégrade le réseau polymère, il peut être avantageux de procéder en deux temps comme l'illustre l'exemple de procédé suivant.

Une cellule préalablement réalisée selon le procédé décrit, contenant un réseau polymère dans lequel est dispersé du cristal liquide (_{χ}L)ₒ est immergée dans de l'éther, solvant S du cristal liquide. Dans un second temps, la cellule est mise en contact avec un second solvant S' venant se substituer au solvant S au sein de la cellule et qui sera séché en phase quasi supercritique ou supercritique.

Pour cela, la cellule est refroidie à -78°C température à laquelle le dioxyde de carbone CO₂, solvant S' est à l'état solide. Ainsi la cellule refroidie en présence de carboglace (CO₂ solide) est introduite dans un autoclave. Plus précisément, 150 grammes de carboglace sont introduits dans un autoclave de volume 300 ml, il est important de mettre dans un volume donné une quantité suffisante de carboglace de manière à toujours conserver suffisamment de CO₂ liquide par rapport à du CO₂ gaz lors du réchauffement de l'ensemble. En effet, la courbe de la figure 2 illustre le chemin thermodynamique suivi lors de l'étape d'évaporation du solvant S'.

L'autoclave est alors continûment chauffé de manière à se déplacer le long de la courbe (I) de la figure 2, puis le long de la courbe (II) pour atteindre le point C du dioxyde de carbone (T_{c} = 31°C, P_{c} = 73 bars) et même le dépasser ; on atteint ainsi un état final correspondant au point E (Te = 40°C, Pe = 100 bars). A partir du point E, on maintient la température Te, tout en décompressant pour progressivement revenir aux conditions atmosphériques, dans un premier temps en redescendant à la pression ambiante (chemin IV), puis dans un second temps en refroidissant jusqu'à la température ambiante (chemin V).

Le séchage en phase supercritique du dioxyde de carbone permet de conserver la structure poreuse du réseau polymère, contrairement au procédé classique d'évaporation du solvant du cristal liquide.

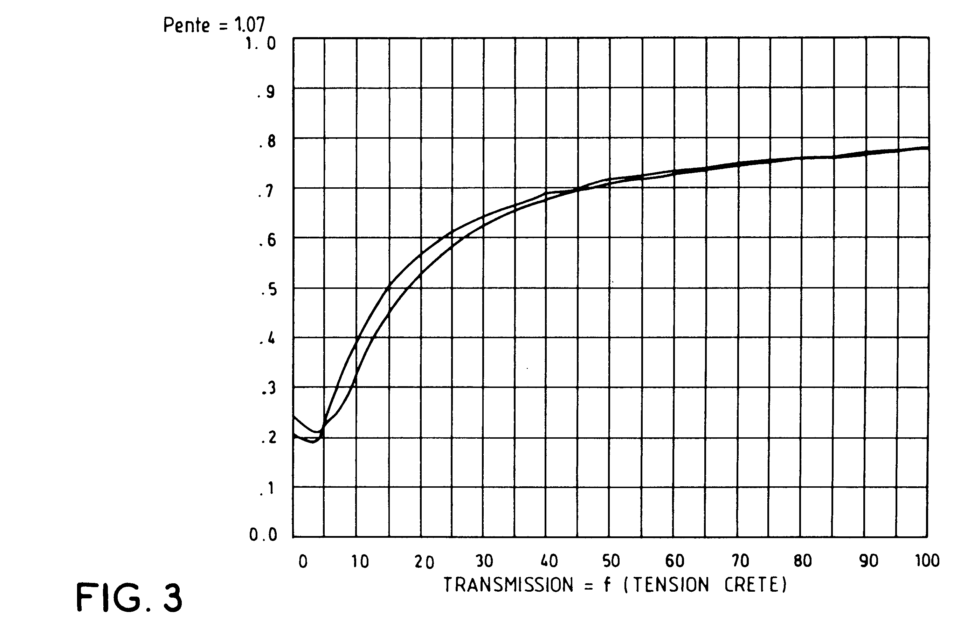

Pour valider ce concept, des cellules composites vidées de leur cristal liquide (_{χ}L)ₒ puis remplies de cristal liquide (_{χ}L) propre introduit par capillarité ont été évaluées en transmission en fonction de la tension. En effet, appliquer une tension sur ce type de cellule permet de passer d'un état diffusant à un état transparent. Cependant dans le cas d'un solvant séché de façon classique, le réseau poreux s'écroule pour se trouver confiné dans une partie de la cellule lors du remplissage de cette cellule, le cristal liquide est confiné majoritairement au-dessus du polymère, l'ensemble perd en diffusion puisque la configuration réseau de polymère/inclusions de cristal liquide a été dégradée, comme l'illustre la figure 3.

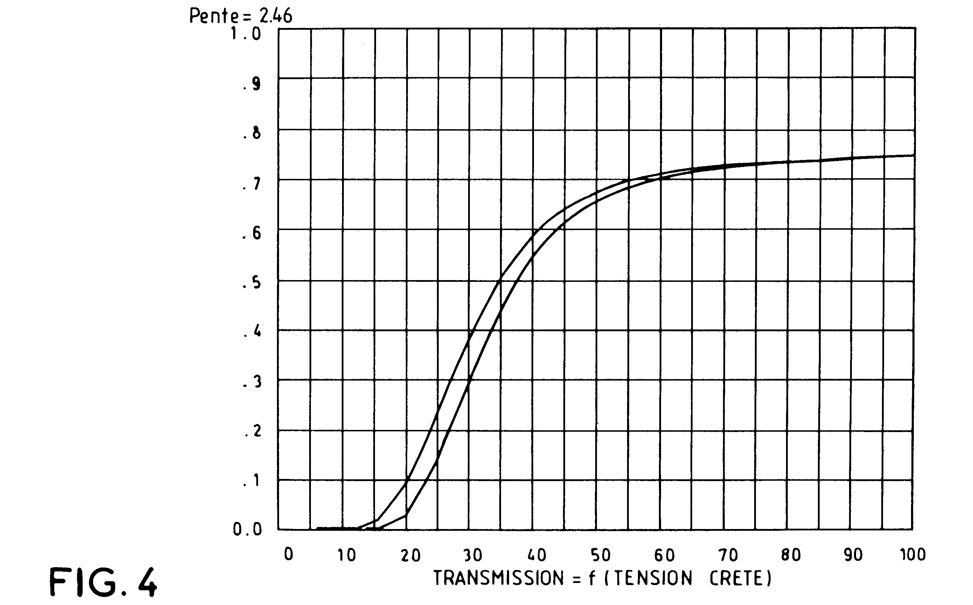

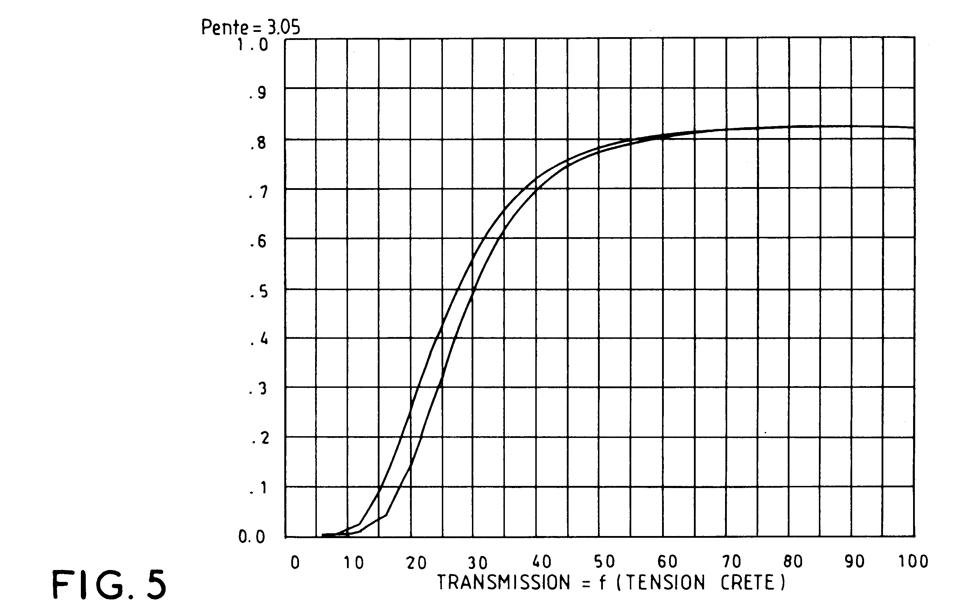

La figure 4 montre un bon contraste entre l'état transparent sous tension témoignant des bonnes qualités de dispersion de la cellule. Cette courbe est surtout à rapprocher de celle de la figure 5, enregistrée sur une cellule contenant un réseau poreux avec des inclusions de cristal liquide (_{χ}L)ₒ donc avant l'opération de séchage en phase supercritique. La comparaison de ces deux courbes témoignent de la conservation de la porosité du réseau de polymère malgré l'étape de séchage du solvant.

Notons que lorsque le cristal liquide est retiré et que le réseau polymère est préservé il peut être particulièrement intéressant de modifier des fonctions réactives (Y) du polymère qui sont en contact avec les pores et donc avec les molécules cristal liquide (_{χ}L). La transformation chimique de telles fonctions en fonctions (X) conduit à l'élaboration d'un réseau poreux de polymère possédant des fonctions chimiques (Y) et à l'interface polymère/cristal liquide, des fonctions chimiques (X). La combinaison des paramètres (X) et (Y) permet de jouer plus amplement sur les performances obtenues avec le matériau composite (notamment le contraste, la tension de commande ...). Typiquement, la transformation chimique des fonctions (Y) en fonction (X) peut être effectuée en présence d'un gaz comportant des fonctions (Z) capables de générer des fonctions (X). A titre d'exemple les fonctions (Y) peuvent être des alcools, les fonctions (Z) des chlorures d'acide.

## Revendications

1. Procédé d'obtention de matériau composite comprenant un polymère réticulé (P), des molécules fluides (m), caractérisé en ce qu'il comprend les étapes suivantes :
* la réalisation d'un film poreux (F) de polymère réticulé comprenant du cristal liquide (_{χ}L)ₒ au sein des pores ;
* l'immersion dudit film dans un solvant (S) du cristal liquide (_{χ}L)ₒ pour dissoudre ledit cristal liquide ;
* le séchage dudit film dans des conditions de température (T_{E}) et de pression (P_{E}) proches ou dans la phase supercritique ;
* le remplissage du film séché par des molécules (m).

2. Procédé d'obtention de matériau composte selon la revendication 1, caractérisé en ce que le film poreux (F) de polymère réticulé est obtenu à partir d'un mélange (M)ₒ de monomère photopolymérisable, de photoamorceur et de cristal liquide (_{χ}L)ₒ.

3. Procédé d'obtention de matériau composite selon l'une des revendications 1 ou 2, caractérisé en ce qu'il comprend une seconde immersion du film poreux de polymère dans un solvant (S') dont les pression et température critiques sont plus proches de la pression et de la température de l'atmosphère ambiante.

4. Procédé d'obtention de matériau composite selon la revendication 3, caractérisé en ce que le solvant (S') est du dioxyde de carbone.

5. Procédé d'obtention de matériau composite selon l'une des revendications 1 à 4, caractérisé en ce que la pression P_{E} et la température T_{E} sont choisies pour optimiser le pouvoir solubilisant du solvant (S).

6. Procédé d'obtention de matériau composite selon l'une des revendications 1 à 5, caractérisé en ce qu'il comprend après séchage en phase supercritique ou en phase proche de l'état critique, d'un film poreux de polymère possédant des fonctions réactives (Y), la transformation chimique de ces fonctions réactives (Y) des chaînes de polymère situées à l'interface polymère/pores du réseau, de manière à obtenir un réseau présentant en volume des chaînes de polymère ayant des fonctions (Y) et en surface des chaînes de polymère ayant des fonctions (X).

7. Procédé d'obtention de matériau composite selon l'une des revendications 1 à 6, caractérisé en ce que les molécules (m) sont des molécules cristal liquide.

8. Procédé d'obtention de matériau composite selon la revendication 7, caractérisé en ce qu'il comprend, après l'étape de séchage du film en phase quasi supercritique ou supercritique, le remplissage des pores du réseau par un mélange cristal liquide (_{χ}L), colorant dichroïque.

9. Procédé d'obtention de matériau composite selon l'une des revendications 1 à 6, caractérisé en ce que les molécules (m) sont des molécules dont l'indice de réfraction varie fortement sous illumination intense.
